# EUROPÄISCHE PATENTSCHRIFT

(11) **EP 3 056 786 B1**
(45) Veröffentlichungstag und Bekanntmachung des Hinweises auf die Patenterteilung: **22.04.2020**
(21) Anmeldenummer: 16154175.0
(22) Anmeldetag: 04.02.2016
(51) Int. Cl.: F16L 55/18, B23D 21/02, E21B 7/30, F16L 55/165

(54) **SCHNEIDVORRICHTUNG ZUM DURCHTRENNEN DER WANDUNG EINER ROHRLEITUNG IN LÄNGSRICHTUNG**
CUTTING DEVICE FOR CUTTING THE WALLS OF A PIPELINE IN LONGITUDINAL DIRECTION
DISPOSITIF DE COUPE DESTINE A SECTIONNER LA PAROI D'UNE CONDUITE DANS LE SENS DE LA LONGUEUR

(30) Priorität: 10.02.2015 DE 102015101874
(43) Veröffentlichungstag der Anmeldung: 17.08.2016
(73) Patentinhaber: TERRA AG fuer Tiefbautechnik, 6260 Reiden (CH)
(72) Erfinder: Jenne, Dietmar, 4805 Brittnau (CH); Siegrist, Martin, 4803 Vordemwald (CH); Frutig, Rudolf, 3127 Mühlethurnen (CH)
(74) Vertreter: Schaumburg und Partner Patentanwälte mbB

(56) Entgegenhaltungen:
- US-A- 4 903 406
- US-A1- 2001 018 007
- US-A1- 2004 131 426
- US-A1- 2006 156 879

## Beschreibung

Die Erfindung betrifft eine Anordnung mit einer Rohrleitung und mit einer Schneidvorrichtung zum Durchtrennen einer Wandung der Rohrleitung in Längsrichtung. Die Schneidvorrichtung hat einen Grundkörper und mindestens eine drehbar mit dem Grundkörper verbundene Schneidrolle. Es sind eine Vielzahl von Schneidvorrichtungen zum Zerschneiden oder Bersten der Wandung von im Erdreich vorhandenen Rohrleitungen in Längsrichtung bekannt. Die Schneidvorrichtungen werden zum Zerschneiden oder Bersten von Rohrleitungen aus Guss, Stahl, Steinzeug, Polyethylen, Polyvinylchlorid oder anderen üblichen Rohrleitungsmaterialien eingesetzt. Nach dem Zerschneiden oder Bersten der Wandung der Rohrleitung kann die aufgeschnittene Rohrleitung mit Hilfe eines Aufweitwerkzeugs auseinander gedrückt und eine erweiterte Öffnung im Erdreich erzeugt werden, in die eine neue Rohrleitung eingezogen werden kann, die den Nenndurchmesser der alten Rohrleitung oder einen größeren Nenndurchmesser hat.

Ein Aufweitwerkzeug zum Aufweiten einer im Erdreich vorhandenen Durchgansöffnung ist beispielsweise aus dem Dokument DE 10 2011000 738 B3 bekannt. Vorrichtungen zum Bewegen einer Schneidvorrichtung oder eines Aufweitwerkzeugs über ein Gestänge sind beispielsweise aus den Dokumenten DE 10 2009 038 058 A1 und DE 103 32 328 B3 sowie über ein Zugseil aus den Dokumenten DE 100 11994 C1 und DE 10 2004 043 481 A1 bekannt.

Ferner sind aus dem Dokument DE 195 13 181 A1 ein Verfahren und eine Vorrichtung zum Ziehen eines im Erdreich verlegten oder zu verlegenden Rohrs bekannt, bei denen ein Zugelement mit einer Ziehvorrichtung in Eingriff steht.

Beim Aufschneiden bzw. Bersten von Rohrleitungen tritt jedoch das Problem auf, dass die Schneid- bzw. Berstkraft fast ausschließlich in Bewegungsrichtung auf die Rohrleitung wirkt. Dies hat zum einen den Nachteil, dass die Rohrleitung bzw. Teile der Rohrleitung in Richtung der Zugkraft bewegt werden können und zum anderen, dass Abschnitte der Rohrleitung gestaucht werden können, sodass dann im gestauchten Bereich teilweise ein Vielfaches der nominalen Wandstärke der Rohrleitung mit Hilfe der Schneidvorrichtung durchtrennt werden muss. Oft kann die Zugvorrichtung die dafür erforderliche Zugkraft nicht aufbringen und/oder die Schneidwerkzeuge sind nicht für derartige Schneidvorgänge ausgelegt. Im Bereich von Muffen zwischen zwei Rohrabschnitten verstärkt sich das Problem zusätzlich, da dort aufgrund der Überlappung der Wandstärke der Rohre und der Muffe naturgemäß eine relativ große Wandstärke zu durchtrennen ist. Dadurch werden insbesondere Bereiche nach Muffen oft gestaucht. Das Stauchen tritt insbesondere bei Kunststoff-, Blei- und Metallrohren auf. Eine gestauchte Rohrleitung ist mit üblichen Schneidvorrichtungen nicht mehr durchtrennbar, sodass an der Stelle das Erdreich aufgegraben werden muss, um den gestauchten Abschnitt der Rohrleitung zu entfernen.

Aus dem Dokument DE 198 31 190 C1 ist eine Schneidscheibe für eine Vorrichtung zum Längsteilen endverlegter Rohre bekannt, die Zähne hat, von denen jeweils ein Zahnrücken als Schneide ausgebildet ist. Mit Hilfe dieser Schneiden wird die Rohrwandung partiell durchtrennt.

Dokument DE 10 2005 001 222 A1 offenbart eine Schneidvorrichtung für Rohrleitungen, bei der mit Hilfe einer zahnradförmigen Schneidrolle die Wandung einer Rohrleitung nur von den Zahnspitzen, jedoch nicht vom Zahngrund durchdrungen wird.

Aufgabe der Erfindung ist es, eine Anordnung mit einer Rohrleitung und mit einer Schneidvorrichtung zum einfachen und sicheren Durchtrennen der Wandung der Rohrleitung in Längsrichtung anzugeben.

Diese Aufgabe wird durch eine Anordnung mit den Merkmalen des Anspruchs 1 gelöst. Vorteilhafte Weiterbildungen sind in den abhängigen Ansprüchen angegeben.

Bei der erfindungsgemäßen Anordnung aus Rohrleitung und Schneidvorrichtung sind an der Schneidrolle der Schneidvorrichtung Zähne vorgesehen, die die Innenseite der Wandung der Rohrleitung bei einem Schneidvorgang kontaktieren. Durch das vollständige Durchtrennen der Wandung der Rohrleitung mit Hilfe dieser Schneidrolle ist somit kein weiteres Schneidwerkzeug zum Durchtrennen der Rohrleitung erforderlich. Die Drehachse der Schneidrolle verläuft insbesondere orthogonal oder orthogonal windschief zur Längsachse der Schneidvorrichtung bzw. zur Bewegungsrichtung der Schneidvorrichtung. Vorzugsweise wird die Schneidvorrichtung durch die zu durchtrennende Rohrleitung hindurchgezogen. Dies kann mit Hilfe eines Zugseils oder mit Hilfe eines Gestänges erfolgen. Vorzugsweise sind die Zähne am Umfang der Schneidrolle in gleichen Winkelabständen zueinander angeordnet.

Besonders vorteilhaft ist es, wenn die Schneidrolle derart dimensioniert und angeordnet ist, dass eine auf den Grundkörper in Richtung der Längsachse der Rohrleitung wirkende Kraft durch die mit Zähnen versehene Schneidrolle umgelenkt wird, sodass eine die innere Wandung der Rohrleitung kontaktierende Flanke oder Spitze des Zahnes eine Kraft auf die innere Wandung der Rohrleitung ausübt, die zumindest eine in radialer Richtung der Rohrleitung senkrecht nach außen gerichtete Kraftkomponente hat. Besonders vorteilhaft ist es, wenn die durch die Flanke oder Spitze des Zahnes auf die innere Wandung der Rohrleitung ausgeübte Kraft nur die in radialer Richtung senkrecht nach außen gerichtete Kraftkomponente hat oder wenn die durch die Flanke oder Spitze des Zahns auf die innere Wandung der Rohrleitung ausgeübte Kraft nur die in radialer Richtung senkrecht nach außen gerichtete Kraftkomponente und eine Kraftkomponente, die in die entgegengesetzte Richtung wie die auf dem Grundkörper in Richtung der Längsachse ausgeübte Kraft gerichtet ist. Dadurch wird die Zugkraft zu großen Teilen oder vollständig in eine Kraftkomponente orthogonal zur Längsrichtung und/oder entgegengesetzt der Zugrichtung umgelenkt, sodass auf die zu durchtrennende Rohrleitung keine oder nur eine geringe Kraft wirkt, die ein Zusammenstauchen der Rohrleitung oder ein Herausdrücken der Rohrleitung aus dem Erdreich bewirken könnte. Dadurch wird sichergestellt, dass das Durchtrennen der Rohrleitung mit Hilfe der erfindungsgemäßen Schneidvorrichtung einfach und sicher erfolgt und dass Komplikationen, wie sie im Stand der Technik auftreten können, vermieden werden.

Erfindungsgemäß ist die Schneidrolle derart dimensioniert und angeordnet, dass der Fußkreis der Zähne der Schneidrolle die Wandung der Rohrleitung vollständig durchdringt. Somit ist die größte Entfernung des Fußkreises der Schneidrolle von der Längsachse der Rohrleitung größer oder gleich dem Außenradius der Rohrleitung. Dadurch wird ein sicheres Durchtrennen der Rohrleitung mit Hilfe der Schneidvorrichtung ermöglicht. Besonders vorteilhaft ist es, wenn der maximale Abstand des Kopfkreises der Schneidrolle zur Längsachse der Rohrleitung um einen Wert im Bereich zwischen 20% bis 40% größer ist als der Außenradius der Rohrleitung. Hierdurch ist ein sicheres und vollständiges Durchtrennen der Rohrleitung selbst dann sichergestellt, wenn sich die Rohrleitung in Folge der Krafteinwirkung der Schneidvorrichtung teilweise verformt und/oder Muffen entlang der Rohrleitung vorhanden sind, die ebenfalls mit Hilfe der Schneidvorrichtung durchtrennt werden müssen.

Besonders vorteilhaft ist es, wenn die Schneidrolle als Zahnrad oder rundes Sägeblatt ausgebildet ist. Hierdurch haben die Zähne der Schneidrolle eine geeignete Form und Anordnung, um die Rohrleitung einfach und sicher längs aufzutrennen.

Besonders vorteilhaft ist es, wenn der Abstand der Zähne der Schneidrolle kleiner als die Wandstärke der Rohrleitung ist. Dadurch ist die über einen Zahn in die Wandung der Rohrleitung einzuleitende Kraft pro Zahn relativ gering, sodass ein relativ kontinuierlicher Schneidvorgang möglich ist.

Vorzugsweise haben die Zähne jeweils mindestens eine parallel zur Drehachse der Schneidrolle verlaufende Schneide. Die Schneide kann dabei durch eine entsprechende Ausbildung des Zahns erfolgen, wobei die Breite der Schneide dann vorzugsweise der Zahnbreite entspricht. Alternativ oder zusätzlich können zusätzliche Schneidelemente, wie Hartmetallplättchen, an den Zähnen vorhanden sein, durch die dann eine Schneide gebildet wird. Beim Ausüben einer Zugkraft auf die Schneidvorrichtung wird dann die Schneide des die innere Wandung der Rohrleitung kontaktierenden Zahns von innen gegen die Wandung der zu durchtrennenden Rohrleitung gedrückt. Durch die Ausbildung von Schneiden ist eine einfache und sichere Durchtrennung der Rohrleitung mit nur geringem Kraftaufwand möglich. Die Schneide hat vorzugsweise dieselbe Breite oder eine größere Breite wie ein an den Fußkreis der Schneidrolle in Richtung der Drehachse der Schneidrolle angrenzender Bereich.

Ferner ist es vorteilhaft, wenn sich die Schneidrolle bei einer auf die Schneidvorrichtung in Längsrichtung der zuschneidenden Rohrleitung ausgeübten Kraft dreht. Die Schneidrolle dreht sich dabei vorzugsweise mit einer Umfangsgeschwindigkeit, die der Zuggeschwindigkeit entspricht, mit der der Grundkörper der Schneidvorrichtung durch die zu durchtrennende Rohrleitung gezogen wird. Somit muss kein separater Antrieb zur Drehung der Schneidrolle vorgesehen werden.

Ferner ist es vorteilhaft, wenn die Schneidvorrichtung mindestens eine Führungsrolle hat, wobei die Schneidrolle und die Führungsrolle bzw. die Schneidrolle und die Führungsrollen vorzugsweise in gleichen Winkelabständen um die Längsachse der Schneidvorrichtung herum angeordnet sind. Insbesondere beim Vorsehen von mindestens zwei, vorzugsweise drei Führungsrollen in einer Ebene orthogonal zur Längsachse der Schneidvorrichtung, und durch die die Drehachse der Schneidrolle oder auch die der Schneidbereich ist, angeordnet sind, kann eine Verformung der zu durchtrennenden Rohrleitung in Folge der die innere Wandung ausgeübten Schnittkraft verhindert oder zumindest reduziert werden. Der Schneidbereich ist der Bereich, in dem die innere Wandung der Rohrleitung durch einen Zahn der Schneidrolle kontaktiert wird. Dadurch ist ein sicheres und einfaches Durchtrennen der Rohrleitung möglich.

Ferner ist es vorteilhaft, wenn stromaufwärts und/oder stromabwärts der Schneidrolle eine Führungsrolle angeordnet ist, die die Innenseite der Wandung der Rohrleitung auf der der Schnittlinie gegenüberliegender Seite kontaktiert.

Allgemein können die Führungsrollen als Omniwheel ausgebildet sein. Dadurch wird ein linienförmiger oder flächiger Kontakt der Führungsrolle mit der Innenseite der Wandung erreicht, sodass die Kraft nicht punktuell von der Führungsrolle in die Wandung eingeleitet wird. Die Führungsrollen können in einem Abstand im Bereich von 0,5- bis 2-mal dem Innendurchmesser der Rohrleitung stromabwärts der Drehachse der Schneidrolle und/oder in einem Abstand von 0,5- bis 2-mal dem Innendurchmesser der Rohrleitung stromaufwärts der Drehachse der Schneidrolle angeordnet sein. Zusätzlich oder alternativ können zwei weitere Führungsrollen um plus/minus 90° versetzt zur Schneidlinie angeordnet sein. Zusätzlich zu der dem der Schneidrolle gegenüberliegenden Führungsrolle die können diese in einem Abstand im Bereich von 0- bis 1-mal dem Nenndurchmesser der Rohrleitung stromabwärts der Drehachse angeordnet sein. Hierdurch wird eine sichere Führung der Schneidvorrichtung und somit der Schneidrolle ermöglicht. Insbesondere wird ein den Schneidvorgang beeinträchtigendes Verformen der Rohrleitung sicher vermieden, wobei mit Hilfe der Führungsrollen eine ausreichend hohe Gegenkraft zu den in die Wandung der Rohrleitung eingeleiteten Schnittkräften sichergestellt ist.

Zusätzlich oder alternativ zu den Führungsrollen kann die Vorrichtung Gleitschienen zur Führung der Schneidvorrichtung in der Rohrleitung haben, die bei entsprechender Anordnung auch einer Verformung der Rohrleitung in Folge der eingeleiteten Schnittkräfte entgegenwirken.

Weiterhin ist es vorteilhaft, wenn zwei Schneidrollen in gleichen Winkelabständen um die Längsachse der Schneidvorrichtung herum angeordnet sind, sodass die Rohrleitung gleichzeitig auf zwei gegenüberliegenden Seiten durchtrennt wird. Dabei können die Drehachsen der Schneidrollen einen Versatz in Längsrichtung der Schneidvorrichtung haben.

Ferner ist es vorteilhaft, wenn die Vorrichtung einen Aufweitkonus umfasst, der in Bewegungsrichtung der Vorrichtung hinter der Schneidrolle, d. h. stromaufwärts der Schneidrolle, angeordnet ist. Dadurch kann die in Längsrichtung durchtrennte Rohrleitung mit Hilfe des Aufweitkonus aufgeweitet werden. Der Aufweitkonus kann gelenkig mit dem Grundkörper der Schneidvorrichtung verbunden sein, vorzugsweise über eine Schnellkupplung. Dadurch ist ein einfaches Handling der Elemente der Schneidvorrichtung möglich. Mit dem Aufweitkonus kann eine neue Rohrleitung in den aufbereiteten Bereich eingezogen werden.

Besonders vorteilhaft ist es, wenn die Breite des Zahnes vom Fußkreis zum Kopfkreis hin abnimmt oder wenn die Breite des Zahnes vom Fußkreis zum Kopfkreis zunimmt.

Besonders vorteilhaft ist es, wenn in Längsrichtung der Schneidvorrichtung nur eine Schneidrolle zum Herstellen eines Schnitts in Längsrichtung der Rohrleitung angeordnet ist. Insbesondere sind nicht zwei Schneidrollen hintereinander zum Erzeugen eines einzigen Schnitts angeordnet. Beim Vorsehen von zwei Schneidrollen zum Herstellen von zwei gegenüberliegenden Schnitten ist vorzugsweise nur eine Schneidrolle je Schlitz vorgesehen.

Bei alternativen Ausführungsformen können die Zähne der Schneidrolle spitz aufeinander zulaufende Zahnflanken, abgerundete Zahnköpfe mit gekrümmten Zahnflanken und/oder einen gekrümmten Verlauf der Zahnzwischenräume haben. Weiterhin ist es vorteilhaft, wenn die Schneidrolle derart dimensioniert und angeordnet ist, dass sie die Wandung der Rohrleitung auch im Bereich der Zahnzwischenräume zwischen den Zähnen vollständig durchtrennt. Ferner ist es vorteilhaft, wenn die Zahnzwischenräume und/oder die Übergänge zwischen den Zähnen mindestens eine entlang des Umfangs der Schneidrolle verlaufende Schneide haben. Durch das Vorsehen dieser weiteren Schneiden ist ein einfacheres und sicheres Durchtrennen der Rohrleitung möglich.

Ferner ist es vorteilhaft, wenn die Zähne asymmetrisch ausgebildet sind, insbesondere wenn die Zähne eine Neigung in Drehrichtung der Schneidrolle haben.

Weitere Merkmale und Vorteile der Erfindung ergeben sich aus der folgenden Beschreibung, die die Erfindung anhand von Ausführungsbeispielen im Zusammenhang mit den beigefügten Figuren näher erläutert.

Es zeigen:
Figur 1 eine erste Anordnung zum Erneuern einer im Erdreich verlegten Rohrleitung mit Hilfe eines Gestängeantriebs nach dem Stand der Technik in einer teilgeschnittenen Darstellung;
Figur 2 eine zweite Anordnung zum Erneuern einer im Erdreich verlegten Rohrleitung mit Hilfe eines Seilzugantriebs gemäß dem Stand der Technik in einer teilgeschnittenen Darstellung;
Figur 3 eine schematische Darstellung der auf ein Schneidwerkzeug bei den Anordnungen nach Figur 1 und Figur 2 auf die zu durchtrennende Rohrleitung wirkenden Kräfte;
Figur 4 eine schematische Darstellung der auf das Schneidwerkzeug beim Durchtrennen der Rohrleitung im Bereich einer Muffe wirkenden Kräfte;
Figur 5 eine schematische Darstellung einer Anordnung zum Durchtrennen einer Rohrleitung gemäß einer vorteilhaften Ausführungsform;
Figur 6 eine Schneidrolle gemäß einer ersten Ausführungsform;
Figur 7 eine Schneidrolle gemäß einer zweiten Ausführungsform;
Figur 8 eine Schneidrolle gemäß einer dritten Ausführungsform;
Figur 9 eine Schneidrolle gemäß einer vierten Ausführungsform;
Figur 10 eine Schneidrolle gemäß einer fünften Ausführungsform; und
Figur 11 eine Schneidrolle gemäß einer sechsten Ausführungsform.

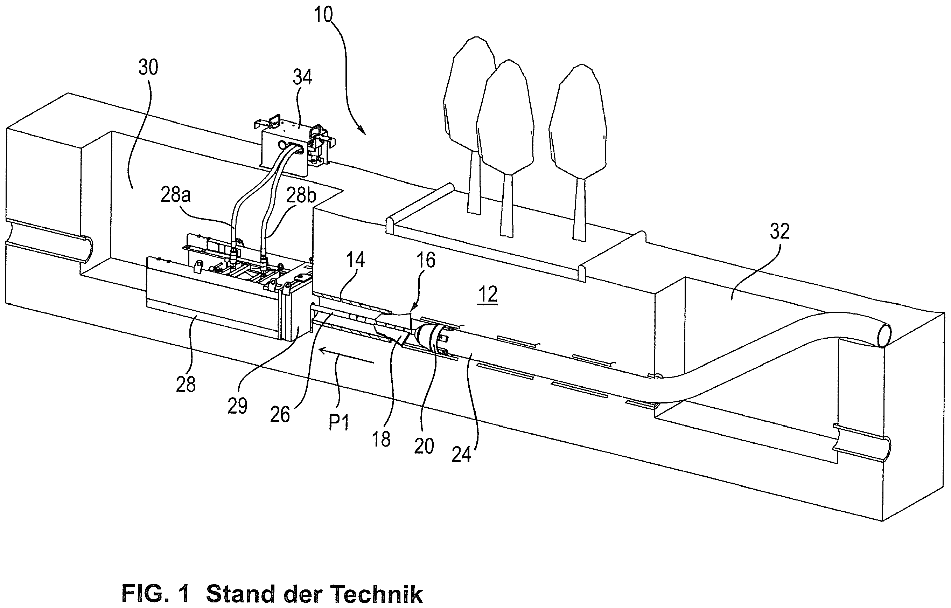

Figur 1 zeigt eine teilgeschnittene Darstellung einer ersten Anordnung 10 zum Durchtrennen einer im Erdreich 12 verlegten Rohrleitung 14 mit Hilfe einer bekannten Schneid- und Aufweitvorrichtung 16. Die Schneid- und Aufweitvorrichtung 16 hat ein Schneidwerkzeug 18, das drei um eine Mittelachse im gleichen Winkel angeordnete in Bewegungsrichtung P1 spitz zulaufende Flügel hat, durch die die Rohrleitung 14 bei einer Bewegung des Schneidwerzeugs 18 in Zugrichtung, d. h. in Richtung des Pfeils P1, aufgeschnitten wird. Die Schneid- und Aufweitvorrichtung 16 hat ferner einen stromaufwärts des Schneidwerkzeugs 18 angeordneten Aufweitkonus 20 zum Aufweiten der durch die Rohrleitung 14 gebildeten Öffnung. Der Aufweitkonus 20 ist mit einer in die aufgeweitete Öffnung einzuziehenden neuen Rohrleitung 24 verbunden. Die Schneidvorrichtung 16 ist über ein aus mehreren Gestängeabschnitten zusammengesetztes Gestänge 26 mit einer als Antriebseinheit dienenden Zug- und Schubeinheit 28 verbunden. Mit Hilfe dieser Zug- und Schubeinheit 28 werden die Gestängeabschnitte von einem Zielschacht 30, in dem sich die Zug- und Schubeinheit 28 befindet, durch die zu durchtrennende Rohrleitung 14 bis in einen Startschacht 32 hindurchgeschoben. Dort wird die Schneidvorrichtung 16 und die mit dem Aufweitkonus 20 der Schneidvorrichtung 16 verbundene neu einzuziehende Rohrleitung 24 mit dem Ende des Gestänges 26 verbunden. Die Zug- und Schubeinheit 28 zieht das Gestänge 26 zusammen mit der Schneidvorrichtung 16 zurück in den Zielschacht 30. Dabei wird mit Hilfe des Schneidwerkzeugs 18 die alte Rohrleitung 14 aufgeschnitten, die Öffnung im Erdreich 12 mit Hilfe des Aufweitkonus 20 aufgeweitet und die neu einzuziehende Rohrleitung 24 in die so gebildete Öffnung bis in den Zielschacht 30 gezogen. Die Zug- und Schubeinheit 28 umfasst mehrere Hydraulikzylinder, die über Anschlussleitungen 28a, 28b mit einer Hydrauliksteuereinheit 34 verbunden sind. Die Hydrauliksteuereinheit 34 ist über weitere nicht dargestellte Hydraulikleitungen außerhalb des Zielschachts 30 mit einem Hydraulikaggregat verbunden.

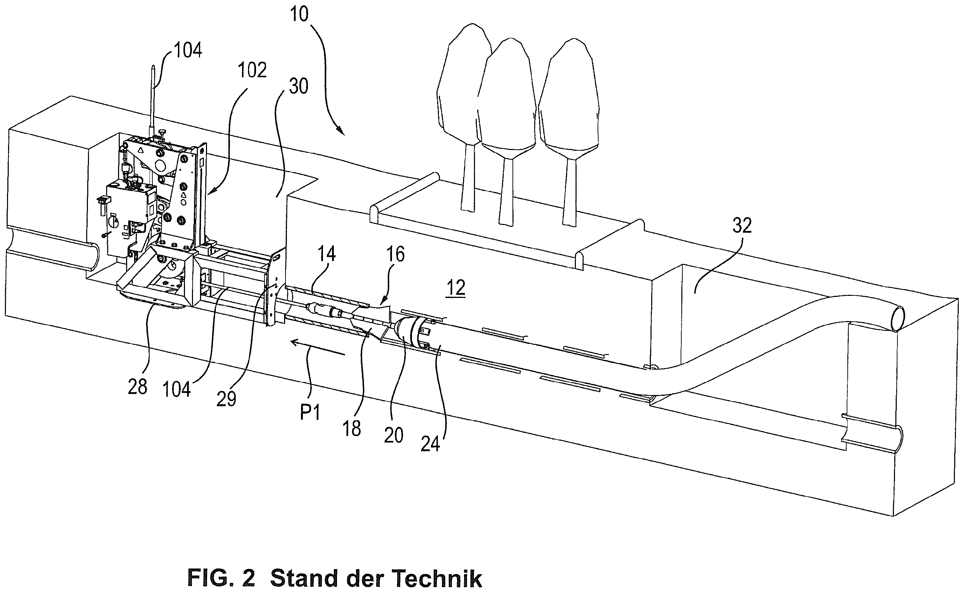

In Figur 2 ist eine teilgeschnittene Darstellung einer zweiten Anordnung 100 zum Erneuern einer im Erdreich 12 verlegten Rohrleitung 14 mit Hilfe der bekannten Schneid- und Aufweitvorrichtung 16 gezeigt. Die Anordnung 100 unterscheidet sich von der Anordnung 10 nach Figur 1 lediglich im Antrieb der Schneidvorrichtung 16. Elemente mit gleichem Aufbau und/oder gleicher Funktion haben dieselben Bezugszeichen.

Anstatt der Zug- und Schubeinheit 28 ist bei der Anordnung 100 nach Figur 2 eine Seilzugeinheit 102 vorgesehen, die ein mit der Schneid- und Aufweitvorrichtung 16 verbundenes Zugseil 104 durch die zu durchtrennende Rohrleitung 14 zieht.

Hierzu wird das Zugseil 104 von dem Zielschacht 30, in dem sich die Seilzugeinheit 102 befindet, durch die zu durchtrennende Rohrleitung 14 bis in den Startschacht 32 hindurchgeführt. Im Startschacht 32 wird die Schneidvorrichtung 16 und die mit dem Aufweitkonus 20 der Schneidvorrichtung 16 verbundene neu einzuziehende Rohrleitung 24 mit dem Ende des Seils 104 verbunden. Die Seilzugeinheit 102 zieht das Zugseil 104 zusammen mit der Schneidvorrichtung 16 zurück in den Zielschacht 30. Dabei wird mit Hilfe des Schneidwerkzeugs 18 die alte Rohrleitung 14 aufgeschnitten, die Öffnung im Erdreich 12 mit Hilfe des Aufweitkonus 20 aufgeweitet und die neu einzuziehende Rohrleitung 24 in die so gebildete Öffnung bis in den Zielschacht 30 gezogen. Außerhalb des Ziehschachts 30 ist eine nicht dargestellte Seiltrommel angeordnet, auf der das mit Hilfe der Seilzugvorrichtung 102 zurückgezogene Seil 104 aufgewickelt wird.

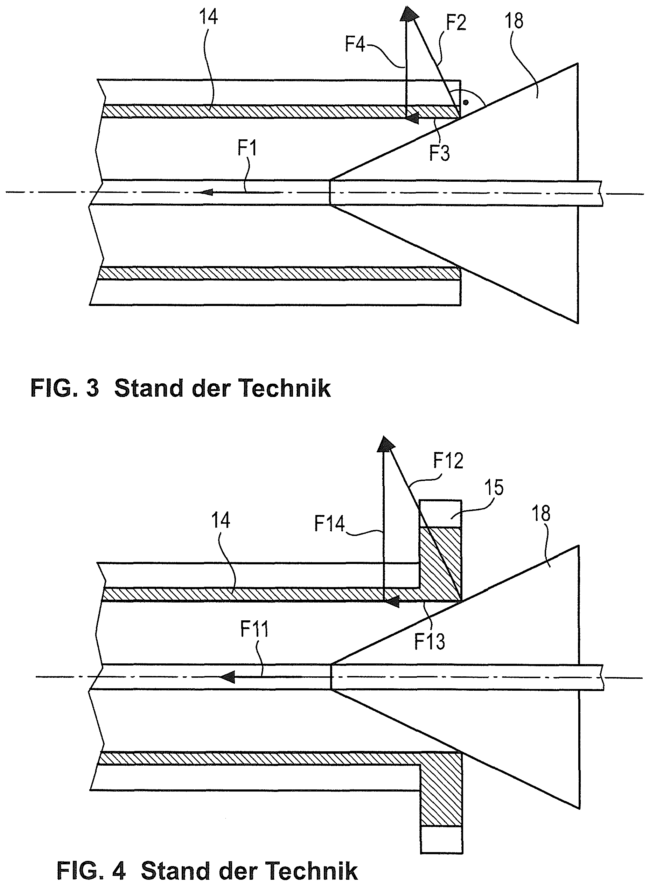

Figur 3 zeigt eine schematische Darstellung der bei den Anordnungen 10, 100 nach Figur 1 und Figur 2 auf das Schneidwerkzeug 18 der Schneidvorrichtung 16 und auf die zu durchtrennende Rohrleitung 14 wirkenden Kräfte. Die durch das Gestänge 26 bzw. über das Zugseil 104 auf das Schneidwerkzeug 18 ausgeübte Zugkraft F1 wird zu je einem Drittel über jeden der drei Flügel des Schneidwerkzeugs 18 in die Rohrleitung 14 eingeleitet. Die resultierende Kraft F2 ist orthogonal zu der durch den Flügel gebildeten Schneide, mit der der Flügel die Innenseite der Wandung der Rohrleitung 14 kontaktiert. Die Kraft F2 hat eine Kraftkomponente F3 in Richtung der Längsachse der Rohrleitung 14 und eine Kraftkomponente F4 orthogonal zur Längsrichtung der Rohrleitung 14, die auf in die Rohrleitung 14 wirken. Durch die Kraftkomponente F3 kann es dazu kommen, dass die Rohrleitung 14 gestaucht, insbesondere zusammengefaltet wird, sodass der gestauchte Bereich eine erheblich größere Wanddicke als die Nominalwanddicke hat. Dadurch kann der gestauchte Bereich mit Hilfe des Schneidwerkzeugs 18 nur sehr schwer oder gar nicht durchtrennt werden. Insbesondere reicht zum Durchtrennen des gestauchten Rohrleitungsbereichs die mit Hilfe der Zug- und Schubeinheit 28 bzw. der Seilzugeinheit 102 erzeugbare Zugkraft F1 nicht aus, sodass dann das Erdreich 12 über der betreffenden Stelle der Rohrleitung 14 aufgegraben und der Bereich der Rohrleitung 14 manuell entfernt werden muss.

Figur 4 zeigt eine schematische Darstellung des auf das Schneidwerkzeug 18 beim Durchtrennen der Rohrleitung 14 im Bereich einer Muffe 15 wirkenden Kräfte. Zum Durchtrennen der Muffe 15 und des in der Muffe 15 befindlichen Rohrleitungsabschnitts ist eine gegenüber der Zugkraft F1 nach Figur 3 erheblich größere Zugkraft F11 aufgrund der durch die Muffe 15 vergrößerten Wandstärke der Rohrleitung 14 erforderlich, sodass auch eine größere Kraft F12 über die Schneide des jeweiligen Flügels des Schneidwerkzeugs 18 in die Rohrleitung 14 eingeleitet wird, wodurch sich auch der Betrag der Kraftkomponenten F14 und F13 gegenüber den Kraftkomponenten F4 und F3 nach Figur 3 erhöht. Hierdurch wirkt auf die Rohrleitung 14 insbesondere im Bereich stromabwärts der Muffe 15 eine durch die Kraftkomponente F13 bewirkte Schubkraft, sodass es in dem Bereich stromabwärts der Muffe 15 zu einem erhöhten Faltungsrisiko kommt. Auch kann durch die Kraftkomponente F13 das Problem auftreten, dass ein Abschnitt der Rohrleitung 14 in den Zielschacht 30 geschoben wird. Um dies zu verhindern muss dann eine entsprechend dimensionierte Rückhalteplatte 29, 103 in dem Zielschacht 30 angeordnet und positioniert werden.

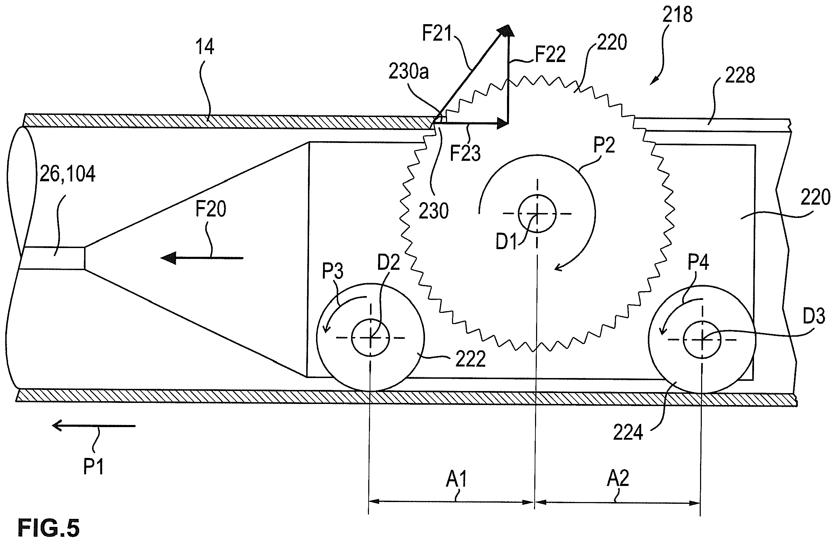

Figur 5 zeigt eine schematische Darstellung einer Anordnung zum Durchtrennen der Rohrleitung 14 in Längsrichtung gemäß einer vorteilhaften Ausführungsform. Anstelle des Schneidwerkzeugs 18 ist bei dieser Ausführungsform eine Schneidvorrichtung 218 vorgesehen, die in gleicher Weise wie die Schneidvorrichtung 18 nach den Figuren 1 und 2 mit dem Gestänge 26 bzw. dem Zugseil 104 zum Durchtrennen der Rohrleitung 14 in Längsrichtung verbunden ist. Die Schneidvorrichtung 218 kann anstelle des Schneidwerkzeugs 18 in den in den Figuren 1 und 2 gezeigten Anordnungen 10, 100 eingesetzt werden. Gleiche Elemente haben gleiche Bezugszeichen.

Die Schneidvorrichtung 218 hat einen Grundkörper 220, zwei Führungsrollen 222, 224 und eine als Zahnrad ausgebildete Schneidrolle 226. Die Zug- und Schubeinheit 28 bzw. die Seilzugeinheit 102 übt über das Gestänge 26 bzw. über das Zugseil 104 eine Zugkraft F20 auf den Grundkörper 220 der Schneidvorrichtung 218 aus. Dabei wird mit Hilfe der Schneidrolle 226 entlang einer Schnittlinie 228 ein Längsschnitt in Längsrichtung der Rohrleitung 14 erzeugt. Hierzu durchdringt die Schneidrolle 226 mit ihren Zähnen die Wandung der Rohrleitung 14. Auf der der Schnittlinie 228 gegenüberliegenden Seite der Schneidvorrichtung 218 rollen die Führungsrollen 222, 224 an der inneren Wandung der Rohrleitung 14 entlang und stützen die Schneidvorrichtung 218 beim Schneidvorgang an der Wandung der Rohrleitung 14 ab. Die Drehachsen D1 der Schneidrolle 226, D2 der Führungsrolle 222, und D3 der Führungsrolle 224 sind parallel, wobei der horizontale Abstand A1 zwischen der Drehachse D1 und der Drehachse D2 einen Wert im Bereich des dem 0,5- und 3-fachen Nenndurchmessers der Rohrleitung 14 und der horizontale Abstand A2 zwischen der Drehachse D1 und der Drehachse D3 ebenfalls einen Wert im Bereich des 0,5- bis 3-fachen des Nenndurchmessers der Rohrleitung 14 hat. Bei anderen Ausführungsformen können die Abstände A1, A2 auch einen Wert im Bereich des 0,5- bis 2-fachen Nenndurchmessers der Rohrleitung 14 haben. Der horizontale Abstand bezieht sich auf eine im Wesentlichen waagerecht angeordnete Rohrleitung 14. Allgemein beziehen sich die Abstände A1 und A2 auf die Längsachse der zu durchtrennenden Rohrleitung 14, wobei die Abstandswerte A1, A2 die Beträge des Abstands in Richtung der Längsachse angeben.

Bei einer Bewegung des Grundkörpers 220 in Richtung des Pfeils P1 wird die Schneidrolle 226 in Richtung des Pfeils P3 und die Führungsrollen 222, 224 in Richtung der Pfeile P3, P4 gedreht. Bei einer Drehung der Schneidrolle 226 in Richtung des Pfeils P2 kontaktieren die Zähne 230 nacheinander die Innenseite der Wandung der Rohrleitung 14 und durchdringen diese nacheinander. Dadurch wird ein in Längsrichtung der Rohrleitung 14 durchgehender Schnitt erzeugt. Die Zahnflanke 230a ist bei der in Figur 5 gezeigten Darstellung bereits teilweise in die Wandung der Rohrleitung 14 eingedrungen und leitet dabei eine Schnittkraft F21 in die Wandung der Rohrleitung 14 ein. Der Betrag der Kraft F21 entspricht ohne Berücksichtigung von Reibungsverlusten beim Drehen der Schneidrolle 226 und der Führungsrollen 222, 224 dem Betrag der Kraft F20. Die Kraft F21 hat einen entgegen der Zugrichtung P1 der Zugkraft F20 wirkenden Kraftanteil F23 und einen orthogonal zur Längsachse der Rohrleitung 14 wirkenden Kraftanteil F22. Dadurch wird die in Zugrichtung P1 wirkende Kraft F20 ausschließlich in Kraftanteile F22, F23 umgelenkt, die nicht in Zugrichtung P1 der Zugkraft F20, sodass keine Kraft auf die Rohrleitung 14 wirkt, durch die eine Stauchung der Rohrleitung 14 stromabwärts der Schneidvorrichtung 218 auftreten kann. Auch wird dann keine Kraft in Richtung des Pfeils P1 auf die Rohrleitung 14 ausgeübt, durch die die Rohrleitung 14 oder einen Abschnitt der Rohrleitung 14 im Erdreich 12 bewegt und in den Zielschacht 30 gezogen werden könnte.

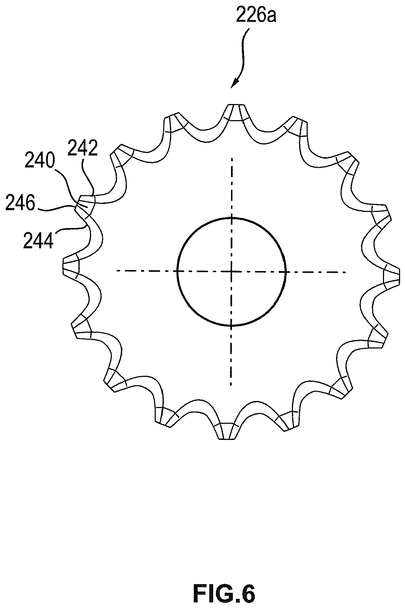

In den Figuren 6 bis 11 ist jeweils eine Schneidrolle 226a bis 226f gezeigt, die jeweils anstelle der Schneidrolle 226 in die Schneidvorrichtung 228 eingesetzt werden können. Je nach Zahnformen verändert sich die Richtung der durch jeweils einen Zahn auf die Wandung der Rohrleitung 14 ausgeübten Schnittkraft F21, wobei die Kraft F21 bei jeder dieser Schneidrollen (226a bis 226f) keinen Kraftanteil hat, der in Richtung der Zugkraft F20 auf die Rohrleitung 14 wirkt. Bei einer geeigneten Wahl des Zahnflankenwinkels bzw. des Winkels der Schneide des Zahns, mit der der Zahn die Innenseite der Wandung der Rohrleitung 14 kontaktiert, kann die Schnittkraft F21 auch ausschließlich einen Kraftanteil in Richtung quer zur Längsachse der Rohrleitung 14 bzw. quer zur Zugkraft F20 haben.

Die in Figur 6 gezeigte Schneidrolle 226a hat mehrere Zähne, von denen einer mit dem Bezugszeichen 240 bezeichnet ist. Die Zahnflanken 242, 244 des Zahns 240 laufen zum Zahnkopf 246 spitz zu und sind jeweils als Schneide ausgebildet sind.

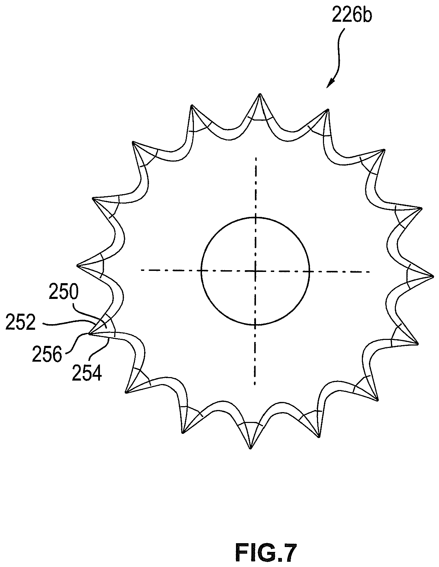

Die Schneidrolle 226b nach Figur 7 hat mehrere Zähne, von denen eine mit dem Bezugszeichen 250 bezeichnet ist. Die Zahnflanken 252, 254 des Zahns 250 sind ebenfalls als Schneiden ausgebildet. Der Zahnkopf 256 ist als Spitze ausgebildet.

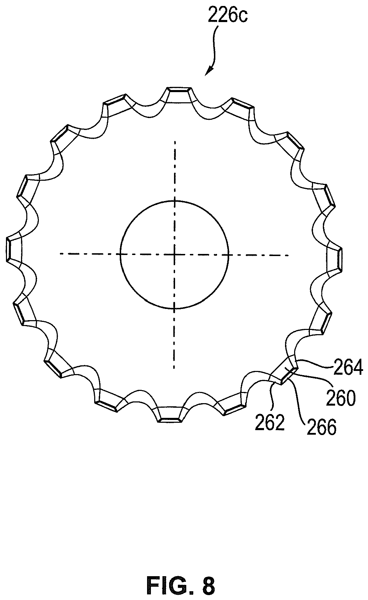

Die in Figur 8 gezeigte Schneidrolle 226 hat mehrere Zähne, von denen einer mit dem Bezugszeichen 260 bezeichnet ist. Die Zahnflanken 262 und 264 des Zahns 260 sind ebenfalls als spitz zulaufende Schneiden ausgebildet. Der Zahnkopf 266 ist abgeflacht.

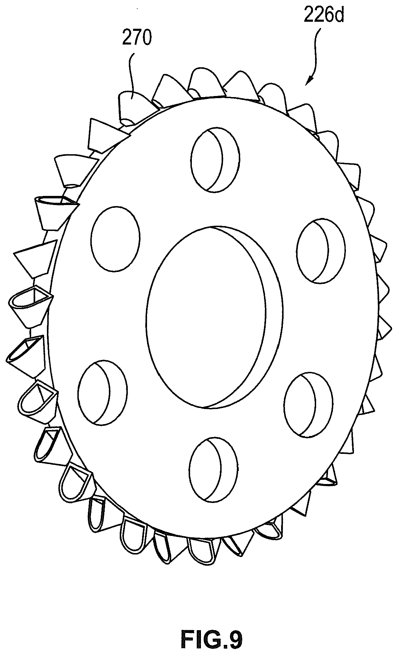

Die in Figur 9 gezeigte Schneidrolle 226d hat mehrere Zähne, von denen einer mit dem Bezugszeichen 270 bezeichnet ist. Die Zähne 270 der Schneidrolle 226d haben im Unterschied zu den Schneidrollen 226, 226a bis 226c eine asymmetrische Zahnform und sind zusätzlich nach außen geneigt, sodass die Zahnmitte im Bereich des Zahnkopfs einen Abstand zur Mittelebene der Schneidrolle 226d hat. Durch die abwechselnde nach außen geneigte Anordnung der Zähne entspricht die Zahnanordnung einem geschränkten Sägeblatt.

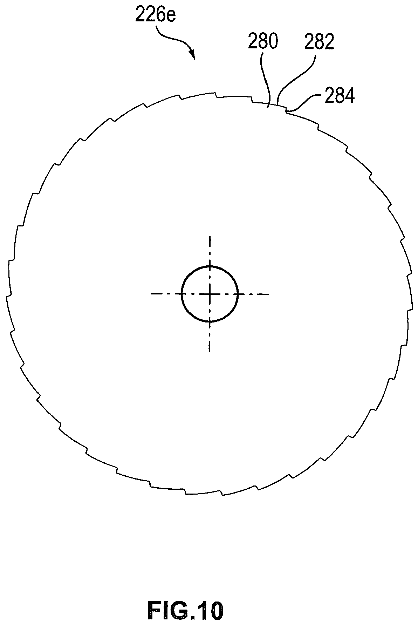

Figur 10 zeigt eine Schneidrolle 226e mit mehreren asymmetrisch ausgebildeten Zähnen, von denen einer mit dem Bezugszeichen 280 bezeichnet ist. Je nach Anordnung der Schneidrolle 226 in der Schneidvorrichtung 218 kontaktiert die kurze Flanke 284 oder die lange Flanke 282 die Innenseite der Wandung der Rohrleitung 14 und dient somit als Schneide.

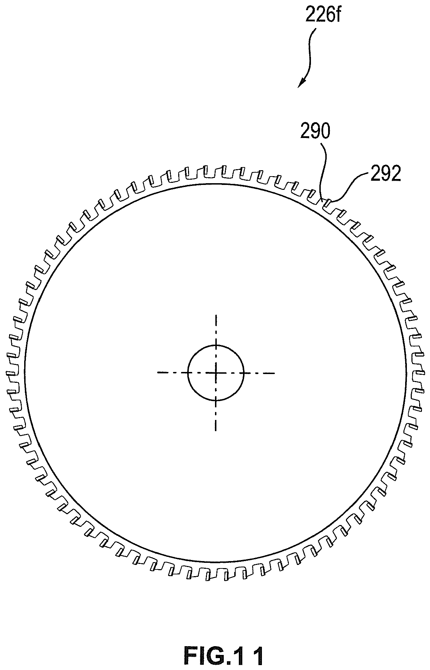

Die in Figur 11 gezeigte Schneidrolle 226f hat mehrere Zähne, von denen ein Zahn mit dem Bezugszeichen 290 bezeichnet ist. Jeder der Zähne 290 ist mit einem Hartmetallplättchen versehen. Die Hartmetallplättchen 292 der Zähne 290 kontaktieren die Innenseite der Wandung der Rohrleitung 14 beim Erzeugen des Längsschnitts und bilden somit eine Schneide des Zahns 240.

Bei der Erfindung können somit Schneidrollen 226, 226a bis 226f mit unterschiedlichen Zahnungen vorteilhaft eingesetzt werden. Die Zahnform und die Anzahl der Zähne 230, 240, 250, 260, 270, 280, 290 ist dabei insbesondere von der Wanddicke, dem Nenndurchmesser der Rohrleitung 14 und/oder dem Material der zu durchtrennenden Rohrleitung 14 abhängig.

Die Bezeichnungen stromabwärts und stromaufwärts beziehen sich auf die Bewegungsrichtung der Schneidvorrichtung 16, 218. Ein Kopfkreis ist ein Kreis entlang der Spitzen der Zähne 230, 240, 250, 260, 270, 280, 290 eines Zahnrades um dessen Drehachse bzw. einer Schneidrolle 226, 226a bis 226f um deren Drehachse D1. Ein Fußkreis ist ein Kreis entlang der Zahnzwischenräume zwischen den Zähnen eines Zahnrades um dessen Drehachse bzw. zwischen den Zähnen 230, 240, 250, 260, 270, 280, 290 einer Schneidrolle 226, 226a bis 226f um deren Drehachse D1.

### Bezugszeichenliste

- 10, 100: Anordnung
- 12: Erdreich
- 14: Rohrleitung
- 15: Muffe
- 16: Schneidvorrichtung
- 18: Schneidwerkzeug
- 20: Aufweitkonus
- 24: neu einzuziehende Rohrleitung
- 26: Gestänge
- 28: Zug-und Schubeinheit
- 28a, 28b: Hydraulikschläuche
- 29: Rückhalteplatte
- 30: Zielschacht
- 32: Startschacht
- 34: Hydrauliksteuereinheit
- 102: Seilzugeinheit
- 103: Rückhalteplatte
- 104: Zugseil
- 218: Schneidvorrichtung
- 220: Grundkörper
- 222, 224: Führungsrolle
- 226: Schneidrolle
- 226a - 226f: Schneidrollen
- 228: Schnittlinie
- 230: Zahn
- 230a: Zahnflanke
- 240: Zahn
- 242, 244: Zahnflanke
- 246: Zahnkopf
- 250: Zahn
- 252, 254: Zahnflanke
- 256: Zahnkopf
- 260: Zahn
- 262, 264: Zahnflanke
- 266: Zahnkopf
- 270: Zahn
- 280: Zahn
- 282, 284: Zahnflanke
- 290: Zahn
- 292: Hartmetallplättchen
- A1, A2: Abstand
- D1, D2, D3: Drehachse
- F1 bis F23: Kraftvektoren
- P1, P2, P3, P4: Richtungspfeile

## Patentansprüche

1. Anordnung mit einer Rohrleitung und mit einer Schneidvorrichtung zum Durchtrennen der Wandung der Rohrleitung in Längsrichtung,
wobei die Schneidvorrichtung (218) einen Grundkörper (220) und mindestens eine drehbar mit dem Grundkörper (220) verbundene Schneidrolle (226, 226a bis 226f) hat, welche mehrere Zähne (230, 240, 250, 260, 270, 280, 290) hat, **dadurch gekennzeichnet,**
**dass** die Schneidrolle (226, 226a bis 226f) die Wandung der Rohrleitung (14) bei einer Bewegung der Schneidvorrichtung (218) durch die Rohrleitung (14) in Längsrichtung (P1) vollständig durchtrennt,
wobei die Schneidrolle (226, 226a bis 226f) derart dimensioniert und angeordnet ist, dass der Fußkreis der Zähne (230, 240, 250, 260, 270, 280, 290) der Schneidrolle (226, 226a bis 226f) die Wandung der Rohrleitung (14) vollständig durchdringt.

2. Anordnung nach Anspruch 1, **dadurch gekennzeichnet, dass** die Schneidrolle (226, 226a bis 226f) derart dimensioniert und angeordnet ist, dass eine auf den Grundkörper (220) in Richtung (P1) der Längsachse der Rohrleitung (14) wirkende Kraft (F20) durch die mit Zähnen (230, 240, 250, 260, 270, 280, 290) versehene Schneidrolle (226, 226a bis 226f) umgelenkt wird, so dass eine die innere Wandung der Rohrleitung (14) kontaktierende Flanke oder Spitze eines Zahnes (230, 240, 250, 260, 270, 280, 290) eine Kraft (F21) auf die innere Wandung der Rohrleitung (14) ausübt, die zumindest eine in radialer Richtung der Rohrleitung (14) senkrecht nach außen gerichtete Kraftkomponente (F22) hat.

3. Anordnung nach Anspruch 2, **dadurch gekennzeichnet, dass** die durch die Flanke oder Spitze des Zahnes (230, 240, 250, 260, 270, 280, 290) auf die innere Wandung der Rohrleitung (14) ausgeübte Kraft nur die in radialer Richtung senkrecht nach außen gerichtete Kraftkomponente (F22) hat, oder dass die durch die Flanke oder Spitze des Zahnes (230, 240, 250, 260, 270, 280, 290) auf die innere Wandung der Rohrleitung (14) ausgeübte Kraft nur die in radialer Richtung senkrecht nach außen gerichtete Kraftkomponente (F22) und eine Kraftkomponente (F23), die in die entgegengesetzte Richtung wie die auf den Grundkörper (22) in Richtung (P1) der Längsachse der Rohrleitung (14) ausgeübten Kraft gerichtet ist, hat.

4. Anordnung nach einem der vorhergehenden Ansprüche, **dadurch gekennzeichnet, dass** der maximale Abstand des Kopfkreises der Schneidrolle (226, 226a bis 226f) zur Längsachse der Rohrleitung (14) um einen Wert im Bereich zwischen 20% bis 40% größer ist als der Außennennradius der Rohrleitung (14).

5. Anordnung nach einem der vorhergehenden Ansprüche, **dadurch gekennzeichnet, dass** die Schneidrolle (226, 226a bis 226f) ein Zahnrad (230, 240, 250, 260, 270, 280, 290) oder ein rundes Sägeblatt (226f) ist.

6. Anordnung nach einem der vorhergehenden Ansprüche, **dadurch gekennzeichnet, dass** der Abstand der Zähne der Schneidrolle (226, 226a bis 226f) kleiner als die Wandstärke der Rohrleitung (14) ist.

7. Anordnung nach einem der vorhergehenden Ansprüche, **dadurch gekennzeichnet, dass** die Zähne (230, 240, 250, 260, 270, 280, 290) jeweils mindestens eine parallel zur Drehachse (D1) der Schneidrolle (226, 226a bis 226f) verlaufende Schneide haben.

8. Anordnung nach einem der vorhergehenden Ansprüche, **dadurch gekennzeichnet, dass** die Schneide dieselbe Breite oder eine größere Breite hat wie ein vom Fußkreis der Schneidrolle (226, 226a bis 226f) in Richtung der Drehachse (D1) der Schneidrolle (226, 226a bis 226f) angrenzender Bereich.

9. Anordnung nach einem der vorhergehenden Ansprüche, **dadurch gekennzeichnet, dass** sich die Schneidrolle (226, 226a bis 226f) bei einer auf die Vorrichtung (218) in Längsrichtung der aufzuschneidenden Rohrleitung (14) ausgeübten Kraft (F20) dreht.

10. Anordnung nach einem der vorhergehenden Ansprüche, **dadurch gekennzeichnet, dass** die Vorrichtung (218) mindestens eine Führungsrolle (222, 224) hat, wobei die Schneidrolle (226, 226a bis 226f) und mindestens eine Führungsrolle (222, 224) in gleichen Winkelabständen um die Längsachse der Vorrichtung (218) herum angeordnet sind.

11. Anordnung nach einem der vorhergehenden Ansprüche, **dadurch gekennzeichnet, dass** stromaufwärts und/oder stromabwärts der Schneidrolle (226, 226a bis 226f) eine Führungsrolle (222, 224) angeordnet ist, die die Wandung der Rohrleitung (14) auf der der Schnittlinie (228) gegenüberliegenden Seite kontaktiert.

12. Anordnung nach einem der vorhergehenden Ansprüche, **dadurch gekennzeichnet, dass** die Vorrichtung (218) Gleitschienen zur Führung der Vorrichtung (218) in der Rohrleitung (14) hat.

13. Anordnung nach einem der vorhergehenden Ansprüche, **dadurch gekennzeichnet, dass** mindestens zwei Schneidrollen (226, 226a bis 226f) in gleichen Winkeiabständen um die Längsachse der Vorrichtung (218) angeordnet sind.

14. Anordnung nach einem der vorhergehenden Ansprüche, **dadurch gekennzeichnet, dass** die Vorrichtung (218) einen Aufweitkonus (20) hat, der in Bewegungsrichtung der Vorrichtung (218) hinter der Schneidrolle (226, 226a bis 226f) angeordnet ist.

## Claims

1. Arrangement having a pipeline and having a cutting device for severing the wall of the pipeline in a longitudinal direction,
wherein the cutting device (218) has a main body (220) and at least one cutting roller (226, 226a to 226f), which is rotatably connected to the main body (220) and which has a plurality of teeth (230, 240, 250, 260, 270, 280, 290), **characterized**
**in that**, when the cutting device (218) moves through the pipeline (14), the cutting roller (226, 226a to 226f) completely severs the wall of the pipeline (14) in the longitudinal direction (P1),
wherein the cutting roller (226, 226a to 226f) is dimensioned, and arranged, in such a way that the root circle of the teeth (230, 240, 250, 260, 270, 280, 290) of the cutting roller (226, 226a to 226f) completely penetrates the wall of the pipeline (14).

2. Arrangement according to Claim 1, **characterized in that** the cutting roller (226, 226a to 226f) is dimensioned, and arranged, in such a way that a force (F20) acting on the main body (220) in the direction (P1) of the longitudinal axis of the pipeline (14) is redirected by way of the cutting roller (226, 226a to 226f) which is provided with teeth (230, 240, 250, 260, 270, 280, 290), such that a flank or tip of a tooth (230, 240, 250, 260, 270, 280, 290 which contacts the inner wall of the pipeline (14), exerts a force (F21) on the inner wall of the pipeline (14) which has at least one perpendicularly outwardly directed force component (F22) in a radial direction of the pipeline (14).

3. Arrangement according to Claim 2, **characterized in that** the force which is exerted by way of the flank or tip of the tooth (230, 240, 250, 260, 270, 280, 290) on the inner wall of the pipeline (14) has only the perpendicularly outwardly directed force component (F22) in a radial direction, or **in that** the force which is exerted by way of the flank or tip of the tooth (230, 240, 250, 260, 270, 280, 290) on the inner wall of the pipeline (14) has only the perpendicularly outwardly directed force component (F22) in a radial direction and a force component (F23), which is directed in the opposite direction to the force exerted on the main body (22) in the direction (P1) of the longitudinal axis of the pipeline (14).

4. Arrangement according to one of the preceding claims, **characterized in that** the maximum distance of the tip circle of the cutting roller (226, 226a to 226f) to the longitudinal axis of the pipeline (14) is greater than the nominal outer radius of the pipeline (14) by a value in the range of between 20% and 40%.

5. Arrangement according to one of the preceding claims, **characterized in that** the cutting roller (226, 226a to 226f) is a toothed wheel (230, 240, 250, 260, 270, 280, 290) or a round saw blade (226f).

6. Arrangement according to one of the preceding claims, **characterized in that** the distance between the teeth of the cutting roller (226, 226a to 226f) is smaller than the wall thickness of the pipeline (14).

7. Arrangement according to one of the preceding claims, **characterized in that** the teeth (230, 240, 250, 260, 270, 280, 290) each have at least one cutting edge which runs parallel to the axis of rotation (D1) of the cutting roller (226, 226a to 226f).

8. Arrangement according to one of the preceding claims, **characterized in that** the cutting edge has the same width as, or a greater width than, a region which adjoins, from the root circle of the cutting roller (226, 226a to 226f), in the direction of the axis of rotation (Dl) of the cutting roller (226, 226a to 226f).

9. Arrangement according to one of the preceding claims, **characterized in that** the cutting roller (226, 226a to 226f) rotates when a force (F20) is exerted on the device (218) in the longitudinal direction of the pipeline (14) to be cut.

10. Arrangement according to one of the preceding claims, **characterized in that** the device (218) has at least one guide roller (222, 224), wherein the cutting roller (226, 226a to 226f) and at least one guide roller (222, 224) are arranged at equal angular distances about the longitudinal axis of the device (218).

11. Arrangement according to one of the preceding claims, **characterized in that** a guide roller (222, 224) is arranged upstream and/or downstream of the cutting roller (226, 226a to 226f), said guide roller contacting the wall of the pipeline (14) on that side which lies opposite the cutting line (228).

12. Arrangement according to one of the preceding claims, **characterized in that** the device (218) has slide rails for guiding the device (218) in the pipeline (14).

13. Arrangement according to one of the preceding claims, **characterized in that** at least two cutting rollers (226, 226a to 226f) are arranged at equal angular distances about the longitudinal axis of the device (218) .

14. Arrangement according to one of the preceding claims, **characterized in that** the device (218) has an expanding cone (20) which is arranged downstream of the cutting roller (226, 226a to 226f), in the direction of movement of the device (218).

## Revendications

1. Ensemble comportant une tuyauterie et un dispositif de coupe pour sectionner la paroi de la tuyauterie dans le sens longitudinal,
dans lequel le dispositif de coupe (218) possède un corps de base (220) et au moins un galet de coupe (226, 226a à 226f) relié en rotation au corps de base (220) et possédant plusieurs dents (230, 240, 250, 260, 270, 280, 290),
**caractérisé en ce que** le galet de coupe (226, 226a à 226f) sectionne entièrement la paroi de la tuyauterie (14) dans le sens longitudinal (P1) au cours d'un mouvement du dispositif de coupe (218) à travers la tuyauterie (14),
le galet de coupe (226, 226a à 226f) étant dimensionné et disposé de manière à ce que le cercle de pied des dents (230, 240, 250, 260, 270, 280, 290) du galet de coupe (226, 226a à 226f) traverse complètement la paroi de la tuyauterie (14).

2. Ensemble selon la revendication 1, **caractérisé en ce que** le galet de coupe (226, 226a à 226f) est dimensionné et disposé de manière à ce qu'une force (F20) agissant sur le corps de base (220) dans le sens (P1) de l'axe longitudinal de la tuyauterie (14) soit détournée par le galet de coupe (226, 226a à 226f) doté de dents (230, 240, 250, 260, 270, 280, 290), de telle sorte qu'un flanc ou une pointe d'une dent (230, 240, 250, 260, 270, 280, 290), en contact avec la paroi intérieure de la tuyauterie (14), exerce une force (F21) sur la paroi intérieure de la tuyauterie (14) ayant une composante de force (F22) dirigée perpendiculairement vers l'extérieur dans le sens radial de la tuyauterie (14).

3. Ensemble selon la revendication 2, **caractérisé en ce que** la force exercée par le flanc ou la pointe de la dent (230, 240, 250, 260, 270, 280, 290) sur la paroi intérieure de la tuyauterie (14) ne possède que la composante de force (F22) dirigée perpendiculairement vers l'extérieur dans le sens radial, ou **en ce que** la force exercée par le flanc ou la pointe de la dent (230, 240, 250, 260, 270, 280, 290) sur la paroi intérieure de la tuyauterie (14) ne possède que la composante de force (F22) dirigée perpendiculairement vers l'extérieur dans le sens radial et une composante de force (F23) dirigée dans le sens opposé comme la force exercée sur le corps de base (22) dans le sens (P1) de l'axe longitudinal de la tuyauterie (14).

4. Ensemble selon l'une quelconque des revendications précédentes, **caractérisé en ce que** la distance maximale du cercle de tête du galet de coupe (226, 226a à 226f) par rapport à l'axe longitudinal de la tuyauterie (14) est plus grande de l'ordre de 20 à 40 % que le rayon nominal extérieur de la tuyauterie (14) .

5. Ensemble selon l'une quelconque des revendications précédentes, **caractérisé en ce que** le galet de coupe (226, 226a à 226f) est une roue dentée (230, 240, 250, 260, 270, 280, 290) ou bien une lame de scie ronde (226f).

6. Ensemble selon l'une quelconque des revendications précédentes, **caractérisé en ce que** la distance des dents du galet de coupe (226, 226a à 226f) est plus petite que l'épaisseur de paroi de la tuyauterie (14).

7. Ensemble selon l'une quelconque des revendications précédentes, **caractérisé en ce que** les dents (230, 240, 250, 260, 270, 280, 290) ont au moins un tranchant parallèle à l'axe de rotation (D1) du galet de coupe (226, 226a à 226f).

8. Ensemble selon l'une quelconque des revendications précédentes, **caractérisé en ce que** le tranchant a la même largeur ou une largeur plus grande qu'une zone adjacente au cercle de pied du galet de coupe (226, 226a à 226f) dans le sens de l'axe de rotation (D1) du galet de coupe (226, 226a à 226f).

9. Ensemble selon l'une quelconque des revendications précédentes, **caractérisé en ce que** le galet de coupe (226, 226a à 226f) tourne en présence d'une force (F20) exercée sur le dispositif (218) dans le sens longitudinal de la tuyauterie (14) à sectionner.

10. Ensemble selon l'une quelconque des revendications précédentes, **caractérisé en ce que** le dispositif (218) possède au moins un galet de guidage (222, 224), le galet de coupe (226, 226a à 226f) et au moins un galet de guidage (222, 224) étant disposés à des distances angulaires identiques, tout autour de l'axe longitudinal du dispositif (218).

11. Ensemble selon l'une quelconque des revendications précédentes, **caractérisé en ce qu'**un galet de guidage (222, 224) se trouve en amont et/ou en aval du galet de coupe (226, 226a à 226f) et est en contact avec la paroi de la tuyauterie (14) sur le côté opposé à la ligne de coupe (228).

12. Ensemble selon l'une quelconque des revendications précédentes, **caractérisé en ce que** le dispositif (218) possède des glissières pour guider le dispositif (218) dans la tuyauterie (14).

13. Ensemble selon l'une quelconque des revendications précédentes, **caractérisé en ce qu'**au moins deux galets de coupe (226, 226a à 226f) sont disposés à des distances angulaires identiques autour de l'axe longitudinal du dispositif (218).

14. Ensemble selon l'une quelconque des revendications précédentes, **caractérisé en ce que** le dispositif (218) possède un cône d'élargissement (20) disposé dans le sens de déplacement du dispositif (218) derrière le galet de coupe (226, 226a à 226f).
